# EUROPÄISCHE PATENTSCHRIFT

(11) **EP 1 997 657 B1**
(45) Veröffentlichungstag und Bekanntmachung des Hinweises auf die Patenterteilung: **20.01.2010**
(21) Anmeldenummer: 08008912.1
(22) Anmeldetag: 14.05.2008
(51) Int. Cl.: B60H 1/34

(54) **Lamellenwalze**
Louver unit with a plurality of blades
Buse d'aération avec une pluralité de lamelles

(30) Priorität: 01.06.2007 DE 102007025506
(43) Veröffentlichungstag der Anmeldung: 03.12.2008
(73) Patentinhaber: AURORA Konrad G. Schulz GmbH & Co. KG, 69427 Mudau (DE)
(72) Erfinder: Kern, Ralf, 74731, Walldürn-Rippberg (DE)
(74) Vertreter: Baronetzky, Klaus

(56) Entgegenhaltungen:
- EP-A- 0 744 308
- DE-U1-202004 002 552
- GB-A- 1 177 390
- US-A- 3 683 787
- US-A- 4 892 288

## Beschreibung

Die Erfindung betrifft eine Lamellenwalze mit Lamellen und für die Lagerung in einem Luftdüsenkörper gemäß dem Oberbegriff von Anspruch 1.

Eine Lamellenwalze der eingangs genannten Art ist dem Fachmann bekannt und geläufig. Eine derartige Lamellenwalze ist Beispielsweise aus DE 20 2004 002 552 U1, der als nächstliegender Stand der Technik angesehen wird, offenbart.

Es ist beispielsweise eine mit schräg stehenden Lamellen versehene Lamellenwalze bekannt, die in einem Düsenkörper gelagert ist, wobei sich die Schwenkachse der Lamellen im Wesentlichen parallel zu den zueinander im Wesentlichen parallelen Schwenkachsen der Lamellen einer Lamellenbank erstreckt. Die Lamellenbank ist wiederum Bestandteil einer Luftdüse und dient zur Richtungsumlenkung des aus der Luftdüse austretenden Luftstroms, die an dem Düsenkörper gelagert ist, wobei auch die Luftdüse eine miteinander schwenkbeweglich gelagerte und sich im wesentlichen parallel zueinander erstreckende Lamelle aufweist.

Aus dem Stand der Technik stehen somit Luftdüsen zur Verfügung, die die Vorteile einer Lamellenwalze mit denjenigen einer Luftdüse mit angeordneten Lamellenbänken kombiniert. Diese aus dem Stand der Technik bekannte Lamellenwalze ist einfach zu fertigen und lässt sich als Kompaktteil leicht montieren. Dennoch erlaubt sie bei entsprechender Ausrichtung einen vergleichsweise großen freien Strömungsquerschnitt und eine gute Luftumlenkung in einer Ebene quer zu ihrer Schwenkachse. Die hier erwähnte Lamellenbank ist an sich aus der US 36 83 787 bekannt.

Bei einer Kombination einer Lamellenbank mit einer Lamellenwalze müssen vergleichsweise wenige Lamellen montiert werden, die sich dann jedoch über die gesamte Breite erstrecken. Die Stellräder sowohl für die Lamellenbank als auch für die Lamellenwalze können an den Stirnseiten angebracht werden, so dass nicht viel freier Strömungsquerschnitt verloren geht und eine Montage auch bei sehr schmalen Düsen und entsprechend beengten räumlichen Verhältnissen möglich ist. Zusammenfassend ist also zu konstatieren, dass die Kombination von Lamellenbank und Lamellenwalze in eine Luftdüse eine innovative Weiterentwicklung von Luftdüsen darstellt. Umso mehr ist es auch erforderlich, dass auch die Lamellenaufnahme in der Lamellenwalze einerseits eine rasche Montage ermöglicht, andererseits aber auch verhindert, dass sich die Lamellen in der Lamellenbank bspw. aufgrund von signifikanten Schwingungen im Fahrzeuginnenraum leicht aus der Klappaufnahme lösen.

Ausgehend von einer Lamellenwalze der eingangs genannten Art liegt der Erfindung daher die Aufgabe zugrunde, eine Lamellenwalze der eingangs genannten Art gemäß dem Oberbegriff von Anspruch 1 so weiterzubilden, dass einerseits eine rasche Montage der Lamellen in der Lamellenwalze gewährleistet ist und andererseits eine sichere Befestigung derselben gegeben ist.

Diese Aufgabe wird erfindungsgemäß durch Anspruch 1 gelöst. Vorteilhafte Weiterbildungen ergeben sich aus den Unteransprüchen.

Gemäß der Erfindung sind zwischen den Stirnseiten der Lamellenwalze Einschnappsegmente angeordnet, welche lamellenseitig jeweils eine Ausnehmung aufweisen, in die die Lamellen kraft- und/oder formschlüssig einschnappbar sind.

Für die kraft- und/oder formschlüssigen Verbindung zwischen dem Einschnappsegment und den Lamellen können Lagerzapfen vorgesehen sein, die von den Lamellen in entgegen gesetzte Richtungen weg stehen und in die Ausnehmungen einschnappen.

Ein Vorteil der Erfindung ist darin zu sehen, dass eine einfache seitliche Montage der Lagerzapfen der Lamellen gegeben ist. Zudem ist gemäß der Erfindung gewährleistet, dass die Lamellen in ungeöffnetem Zustand derart gelagert sind, dass sie nicht heraus gedrückt werden können.

Im Rahmen der Erfindung ist dazu auch vorgesehen, dass das Einschnappsegment ein Armteil aufweist und innerhalb der Ausnehmung das Armteil mit einer Ausbuchtung versehen ist. Innerhalb der Ausnehmung ist zudem erfindungsgemäß eine Wölbung ausgeformt, wobei die Ausnehmung zwischen Ausbuchtung und Wölbung bogenförmig ausgebildet ist. Diese konstruktiven Maßnahmen unterstützen die kraft- und/oder formschlüssige Verbindung zwischen Einschnappsegment und Lamellen bzw. Lagerzapfen.

Weitere Vorteile, Einzelheiten und Merkmale ergeben sich aus der nachfolgenden Beschreibung der Ausführungsbeispiele der Erfindung anhand der Zeichnungen.

Es zeigen:
- Fig. 1: eine perspektivische Ansicht einer Ausführungsform einer erfindungsgemäßen Lamellenwalze; und
- Fig. 2: in perspektivischer Ansicht einen vergrößerten Ausschnitt aus der erfindungsgemäßen Lamellenwalze, in der das Einschnappsegment diametral zu den restlichen Einschnappsegmenten angeordnet ist.

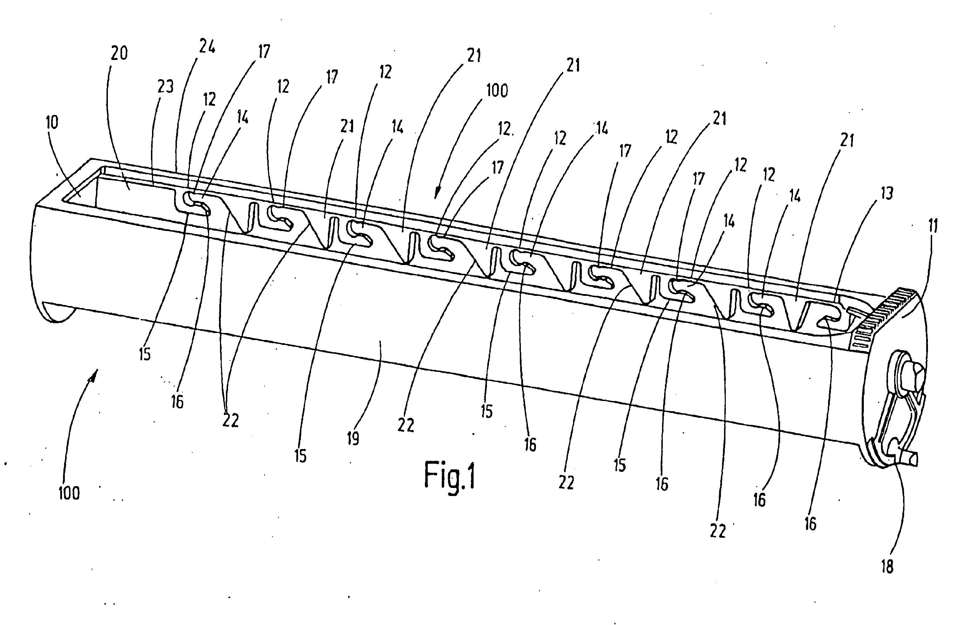

In Figur 1 ist eine erfindungsgemäße Lamellenwalze dargestellt, die mit dem Bezugszeichen 100 versehen ist.

Die Lamellenwalze 100 ist Bestandteil einer Luftdüse und weist zwei Stirnseiten 10, 11 sowie zwei Seitenteile 19, 20 auf. Die Lamellenwalze 100 weist zudem Einschnappsegmente 12 für die Lagerung von Lamellen (nicht gezeigt) auf. Die in Figur 1 gezeigten Einschnappsegmente 12 besitzen in Figur 1 nicht gezeigte korrespondierende Einschnappsegmente, die entlang der Seitenfläche 19 angeordnet sind. Die Einschnappsegmente 12 treten aus einer Kante 23 hervor, die entlang der Seitenteile 19, 20 ausgeformt ist. Sowohl die hier nicht gezeigten Lamellen als auch die Einschnappsegmente 12 sind als weiche Kunststoff-Formteile ausgebildet. Die Einschnappsegmente 12 verfügen jeweils über eine Ausnehmung 14, in die die für die Lamellenwalze 100 vorgesehenen Lamellen kraft- und/oder formschlüssig einschnappbar sind. Die Lamellen können dazu Lagerzapfen aufweisen, die von den Lamellen in entgegen gesetzte Richtungen wegstehen und in die Ausnehmungen 14 einschnappen.

Die Einschnappsegmente 12 sind konstruktiv derart ausgestaltet, dass sie über ein Armteil 15 verfügen, das elastisch ausgebildet ist. In einer hier verwendeten Terminologie könnte man daher auch von einem Federarm sprechen. Innerhalb der Ausnehmung 14 ist das Armteil 15 mit einer Ausbuchtung 16 versehen. Zudem ist innerhalb der Ausnehmung 14 eine Wölbung 17 ausgeformt. Diese Wölbung ist einteilig in der Kante 23 ausgeformt und befindet sich innerhalb der Ausnehmung 14 schräg gegenüber der Ausbuchtung 15. Die Ausnehmung 14 ist zwischen der Ausbuchtung 16 und der Wölbung 17 bogenförmig ausgebildet. Dabei erstrecken sich die Arme des Armteils 15 ("Federarm") in der hier gezeigten Ausführungsform mit Ausnahme des Armteils 16 des Einschnappsegments 13 in Richtung der mit einem Stellrad 18 für das Verschwenken der Lamellenwalze 100 versehenen Stirnseite 11.

Zwischen den Einschnappsegmenten 12 sind Vorsprünge 21 angeordnet, die ebenfalls aus der Kante 23 hervortreten. Die der Ausnehmung 14 zugewandte Seite 23 des Vorsprungs 21 ist dabei schräg ausgebildet. Durch diese konstruktive Maßnahme kann eine von oben eingeführte Lamelle mit einem Zapfen entlang der Seite 23 geführt werden, um in Richtung der Ausnehmung 14 geführt und in diese eingeschnappt zu werden. Auf diese Weise wird eine leichte Montage der Lamellen erzielt. Sowohl die Ausbuchtung 16 als auch die Wölbung 17 dienen der besseren Arretierung der Lamellen in den Einschnappsegmenten 12.

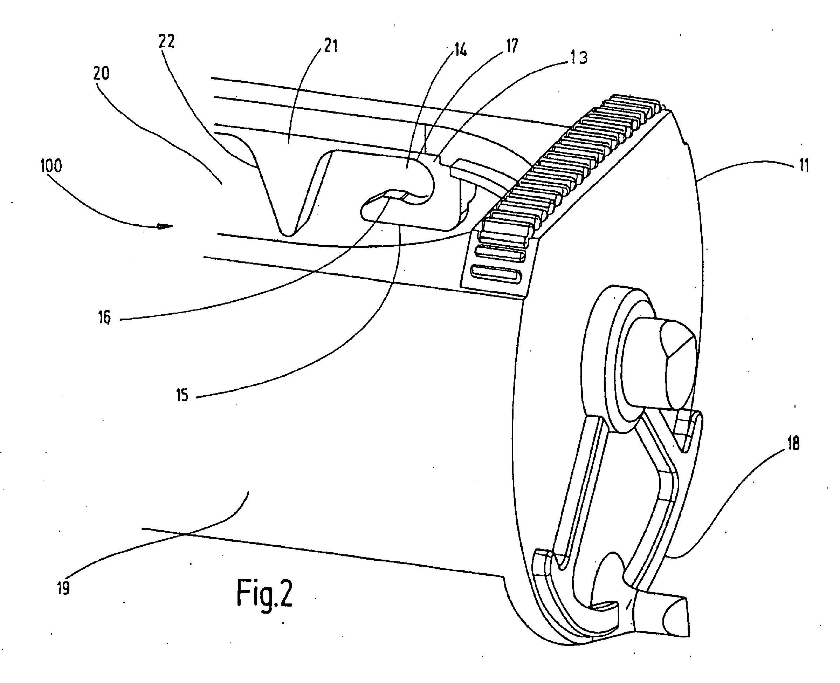

Aus Figur 2 geht hervor, dass das zur Stirnseite 11 nächst befindliche Einschaltsegment 13 zu den restlichen Einschnappsegmenten 12 diametral, d. h. um 180° zu den restlichen Einschnappsegmenten 12 angeordnet ist. Diese Anordnung ist in der hier gezeigten Ausführungsform konstruktionsbedingt. Zwischen dem Einschnappsegment 13 und dem dazu nächst liegenden Einschnappsegment 12 ist ebenfalls ein Vorsprung 21 angeordnet, wobei jedoch in der in Figur 2 gezeigten Ausführungsform der erfindungsgemäßen Lamellenwalze 100 die der Ausnehmung 14 des Einschnappsegments 13 zugewandten Seite des Vorsprungs 21 nicht schräg ausgebildet ist.

Die vorliegende Erfindung beschränkt sich in ihrer Ausführung nicht auf die vorstehend angegebenen, bevorzugten Ausführungsbeispiele. Vielmehr ist eine Anzahl von Varianten denkbar, welche von der dargestellten Lösung auch bei grundsätzlich anders gearteten Ausführungen Gebrauch machen. Somit ist es nicht erforderlich, dass die Ausnehmungen in ihrem Inneren einen bogenförmigen Verlauf nehmen. Auch können bspw. die Vorsprünge 21 unterschiedlich ausgestaltet sein.

### Bezugszeichenliste:

- 100: Lamellenwalze
- 10: Stirnseite
- 11: Stirnseite
- 12: Einschnappsegmente
- 13: Einschnappsegmente
- 14: Ausnehmung
- 15: Armteil
- 16: Ausbuchtung
- 17: Wölbung
- 18: Stellrad
- 19: Seitenteil
- 20: Seitenteil
- 21: Vorsprünge
- 22: Seite
- 23: Kante

## Patentansprüche

1. Lamellenwalze mit Lamellen und für die Lagerung in einem Luftdüsenkörper, **dadurch gekennzeichnet, dass** zwischen Stirnseiten (10, 11) der Lamellenwalze (100) Einschnappsegmente (12, 13) angeordnet sind, welche lamellenseitig jeweils eine Ausnehmung (14) aufweisen, in die die Lamellen kraft- und/oder formschlüssig einschnappbar sind.

2. Lamellenwalze nach Anspruch 1, **dadurch gekennzeichnet, dass** die Einschnappsegmente (12, 13) ein Armteil (15) aufweisen.

3. Lamellenwalze nach einem der Ansprüche 1 oder 2, **dadurch gekennzeichnet, dass** das Armteil (15) elastisch ausgebildet ist.

4. Lamellenwalze nach Anspruch 2 oder 3, **dadurch gekennzeichnet, dass** innerhalb der Ausnehmung (14) das Armteil (15) mit einer Ausbuchtung (16) versehen ist.

5. Lamellenwalze nach Anspruch 1, **dadurch gekennzeichnet, dass** innerhalb der Ausnehmung (14) eine Wölbung (17) ausgeformt ist, wobei die Ausnehmung (14) zwischen Ausbuchtung (16) und Wölbung (17) bogenförmig ausgebildet ist.

6. Lamellenwalze nach einem der Ansprüche 2 bis 5, **dadurch gekennzeichnet, dass** sich die Arme des Armteils (15) in Richtung der mit einem Stellrad (18) für das Verschwenken der Lamellenwalze (100) versehenen Stirnseite (11) erstrecken.

7. Lamellenwalze nach Anspruch 6, **dadurch gekennzeichnet, dass** das zur Stirnseite (11) nächst befindliche Einsschnappsegment (13) zu den restlichen Einschnappsegmenten (12) diametral angeordnet ist.

8. Lamellenwalze nach einem der vorhergehenden Ansprüche, **dadurch gekennzeichnet, dass** zwischen den Stirnseiten (10, 11) die Einschnappsegmente (12) beidseitig der Lamellenwalze (100) angeordnet sind.

9. Lamellenwalze nach einem der vorhergehenden Ansprüche, **dadurch gekennzeichnet, dass** zwischen den Einschnappsegmenten (12) Vorsprünge (21) angeordnet sind.

10. Lamellenwalze nach Anspruch 9, **dadurch gekennzeichnet, dass** die der Ausnehmung (14) zugewandten Seite (22) des Vorsprungs (21) schräg ausgebildet ist.

11. Lamellenwalze nach einem der vorhergehenden Ansprüche, **dadurch gekennzeichnet, dass** die Lamellen und die Einschnappsegmente (12) sämtlich als gleiche Kunststoff-Formteile ausgebildet sind.

12. Lamellenwalze nach einem der vorhergehenden Ansprüche, **dadurch gekennzeichnet, dass** die Lamellen und die Einschnappsegmente (12) aus einem weichelastischen Kunststoff sind.

13. Luftdüse, insbesondere für die Belüftung von Fahrzeugen, **gekennzeichnet** die Verwendung einer Lamellenwalze mit den Merkmalen eines der Ansprüche 1 bis 12.

## Claims

1. A lamella roller comprising lamellae and serving for being mounted in an air nozzle body, **characterized in that** snap-in segments (12, 13) are arranged between the front sides (10, 11) of the lamella roller (100), said snap-in segments each comprising a recess (14) into which the lamellae can be snapped in a force-fitting and/or form-fitting manner.

2. A lamella roller as claimed in claim 1, **characterized in that** the snap-in segments (12, 13) comprise an arm part (15).

3. A lamella roller as claimed in claim 2, **characterized in that** the arm part (15) is of elastic design.

4. A lamella roller as claimed in claim 2, **characterized in that** the arm part (15) is provided with a bulge (16) within the recess (14).

5. A lamella roller as claimed in claim 1, **characterized in that** a curvature (17) is formed within the recess (14), with the recess (14) being of curved design between the bulge (16) and the curvature (17).

6. A lamella roller as claimed in one of the claims 2 to 5, **characterized in that** the arms of the arm part (15) extend in the direction of the front side (11) which is provided with an adjusting wheel (18) for pivoting the lamella roller (100).

7. A lamella roller as claimed in claim 6, **characterized in that** the snap-in segment (13) situated closest to the front side (11) is arranged diametrically to the remaining snap-in segments (12).

8. A lamella roller as claimed in one of the preceding claims, **characterized in that** between the front sides (10, 11), the snap-in segments (12) are arranged on both sides of the lamella roller (100).

9. A lamella roller as claimed in one of the preceding claims, **characterized in that** projections (21) are arranged between the snap-in segments (12).

10. A lamella roller as claimed in claim 9, characaterized in that the side (22) of the projection (21) which faces the recess (14) is of inclined design.

11. A lamella roller as claimed in one of the preceding claims, **characterized in that** the lamellae and the snap-in segments (12) are all designed as identical plastic moulded parts.

12. A lamella roller as claimed in one of the preceding claims, **characterized in that** the lamellae and the snap-in segments (12) are made from a flexible plastic material.

13. An air nozzle, in particular for ventilating vehicles, **characterized by** the use of a lamella roller comprising the features as defined in one of the claims 1 to 12.

## Revendications

1. Cylindre à lamelles avec des lamelles pour loger dans un corps de conduit d'air **caractérisé en ce que** des segments à encliquetage (12, 13) sont disposés entre les fronts (10, 11) du cylindre à lamelles (100), qui présentent respectivement sur le côté des lamelles un creux (14), dans lequel les lamelles sont emboîtables par encliquetage à engagement positif et/ou par adhérence.

2. Cylindre à lamelles selon la revendication 1, **caractérisé en ce que** les segments encliquetables (12, 13) présentent une section à bras (15).

3. Cylindre à lamelles selon l'une des revendications 1 ou 2, **caractérisé en ce que** la section à bras (15) est configuré élastique.

4. Cylindre à lamelles selon lune des revendications 2 ou 3, **caractérisé en ce que** la section à bras (15) est munie d'une indentation (16) dans le creux (14).

5. Cylindre à lamelles selon la revendication 1, **caractérisé en ce qu'**une voûte (17) est formée à lintérieur du creux (14), où le creux (14) est configuré en arc entre lindentation (16) et la voûte (17).

6. Cylindre à lamelles selon lune des revendications 2 à 5, **caractérisé en ce que** les bras de la section à bras (15) s'étendent en direction du front (11) équipée d'une roue de position (18) pour la rotation du cylindre à lamelles (100).

7. Cylindre à lamelles selon la revendication 6, **caractérisé en ce que** le segment à encliquetage (13) qui se trouve le plus proche du front (11) est disposé diamétralement opposé aux segments à encliquetage restants (12).

8. Cylindre à lamelles selon lune des revendications précédentes, **caractérisé en ce que** les segments encliquetables (12) sont disposés des deux côtés du cylindre à lamelles (100) entre les fronts (10, 11).

9. Cylindre à lamelles selon lune des revendications précédentes **caractérisé en ce que** des parties en saillie (21) sont disposées entre les segments encliquetables (12).

10. Cylindre à lamelles selon la revendication 9, **caractérisé en ce que** la face (22) de la partie en saillie (21) tournée vers le creux (14) est configurée en diagonale.

11. Cylindre à lamelles selon lune des revendications précédentes, **caractérisé en ce que** les lamelles et les segments encliquetables (12) sont configuréés comme au complet comme une même pièce préformée de matière plastique.

12. Cylindre à lamelles selon lune des revendications précédentes, **caractérisé en ce que** les lamelles et les segments encliquetables (12) sont faits d'une matière plastique élastique non-rigide.

13. Buse d'air de préférence pour la ventilation des véhicules, **caractérisée par** l'utilisation d'un cylindre à lamelles avec les caractéristiques de l'une des revendications 1 à 12.
